Europäisches Patentamt

(19) European Patent Office

Office européen des brevets

(11) Numéro de publication: **0 246 143**
**B1**

(12) **FASCICULE DE BREVET EUROPEEN**

(45) Date de publication du fascicule du brevet: **16.01.91**

(21) Numéro de dépôt: **87401036.6**

(22) Date de dépôt: **06.05.87**

(51) Int. Cl.⁵: **G 21 C 15/24,** G 21 C 5/10

(54) **Dispositif de support d'une capacité de refoulement associée à une pompe suspendue de réacteur nucléaire.**

(30) Priorité: **16.05.86 FR 8607076**

(43) Date de publication de la demande:
**19.11.87 Bulletin 87/47**

(45) Mention de la délivrance du brevet:
**16.01.91 Bulletin 91/03**

(84) Etats contractants désignés:
**DE GB IT**

(56) Documents cités:
**EP-A-0 155 883**
**DE-A-3 236 494**
**FR-A-2 300 253**
**FR-A-2 524 687**

(73) Titulaire: **FRAMATOME**
**Tour Fiat 1, Place de la Coupole**
**F-92400 Courbevoie (FR)**

(72) Inventeur: **Terny, Philippe**
**21 bis Boulevard de la République**
**F-92260 Fontenay aux Roses (FR)**
Inventeur: **Nedelec, Michel**
**35 Rue des Peupliers**
**F-91540 Mennecy (FR)**

(74) Mandataire: **Polus, Camille et al**
**c/o Cabinet Lavoix 2, Place d'Estienne d'Orves**
**F-75441 Paris Cedex 09 (FR)**

Courier Press, Leamington Spa, England.

## Description

L'invention concerne un dispositif de support d'une capacité de refoulement d'une pompe suspendue pour la mise en circulation du fluide de refroidissement d'un réacteur nucléaire et en particulier une pompe primaire d'un réacteur nucléaire a neutrons rapides du type intégré.

Les pompes primaires des réacteurs nucléaires a neutrons rapides qui sont généralement refroidies par un métal liquide tel que le sodium sont disposees, dans le cas où le réacteur est de type intégré, a l'intérieur de la cuve du réacteur renfermant également le coeur immergé dans du sodium liquide primaire remplissant la cuve. Ces pompes primaires comportent un corps de forme globalement cylindrique disposé verticalement et supporté a sa partie supérieure par la dalle du réacteur fermant la cuve. Le corps de la pompe est en communication, à sa partie inférieure, avec une capacité de refoulement qui est généralement de forme sphérique. Cette capacité sphérique est reliée à deux conduites de refoulement qui débouchent a leur extrémité opposée à l'extrémité reliée à la capacité sphérique, dans le sommier supportant le coeur du réacteur.

Le sodium liquide qui est aspiré par la pompe au niveau d'ouies traversant l'enveloppe de son corps vertical est refoulé dans la capacité sphérique puis réparti dans les conduites de refoulement pour être réinjecté sous les assemblages du coeur du réacteur.

La sphére de refoulement est fixée de façon rigide sur le platelage qui est une structure fixe du reacteur reposant sur le fond de la cuve et supportant le sommier qui sert lui-même de support aux assemblages du coeur.

Lors de variations de régime rapides du réacteur accompagnées de variations rapides et de forte amplitude de la température du fluide de refroidissement, de même que dans le cas d'un fonctionnement anormal du réacteur à la suite d'un incident, s'accompagnant également de fortes variations de température, la sphére de refoulement qui est rigidement solidaire du platelage subit de fortes contraintes d'origine thermique. Cette sphére a en effet tendance à se déplacer sous l'effet des variations de dilatations accompagnant les variations de température mais elle se trouve pratiquement immobilisée par sa fixation rigide sur le platelage. Il s'ensuit de fortes contraintes dans les matériaux constituant la sphére de refoulement et les organes qui lui sont reliés.

Le but de l'invention est donc de proposer un dispositif de support d'une capacité de refoulement associée a une pompe pour la mise en circulation du fluide de refoidissement d'un réacteur nucléaire comportant un corps vertical supporté à sa partie supérieure et communiquant à sa partie inférieure avec la capacité de refoulement portée par une structure fixe du réacteur et reliée à des moyens de refoulement débouchant sous le coeur du réacteur et disposés de façon symétrique par rapport à un plan vertical passant par l'axe ZZ' de la pompe, ce support ayant une structure permettant de limiter a une valeur faible les contraintes d'origine thermique s'exerçant sur sa capacité de refoulement et les organes qui y sont reliés, dans le cas de variations rapides de température du fluide de refroidissement du réacteur.

Dans ce but, le dispositif de support comporte au moins une lame métallique sensiblement plane placée verticalement suivant l'axe ZZ' de la pompe et perpendiculairement au plan de syémtrie des moyens de refoulement, la capacité étant fixée à la lame dans une zone de liaison située en-dessous de la zone de cette lame assurant sa liaison avec la structure fixe de façon à être suspendue à la structure fixe par la lame et la lame comportant une partie amincie, sur une certaine hauteur, dans sa partie centrale entre ses zones de liaison.

Afin de bien faire comprendre l'invention, on va maintenant décrire à titre d'exemple non limitatif, en se reportant aux figures jointes en annexe, un mode de réalisation d'une pompe suivant l'invention utilisée pour la mise en circulation du sodium liquide primaire dans un réacteur nucléaire à neutrons rapides.

La figure 1 est une vue en coupe par un plan vertical de symétrie de la partie inférieure de la pompe en position de service à l'intérieur de la cuve du réacteur.

La figure 1a est une vue agrandie du détail A de la figure 1.

La figure 2 est une vue en coupe suivant II—II de la figure 1.

La figure 3 est une vue en coupe suivant III—III de la figure 1.

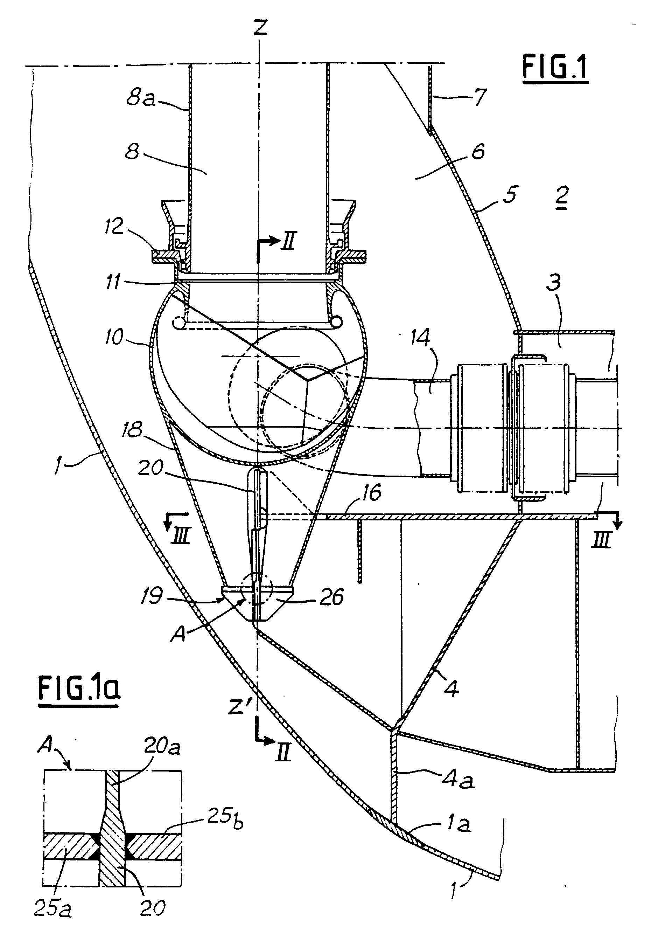

Sur la figure 1, on voit une partie du fond de la cuve 1 d'un réacteur nucléaire à neutrons rapides refroidi par du sodium, la cuve étant remplie de sodium liquide de refroidissement dans lequel est plongé le coeur 2 du réacteur.

Le coeur 2 est constitué par des assemblages placés côte à côte et engagés par leur partie inférieure dans un sommier 3 reposant sur un platelage 4 constitué par une structure rigide et de grandes dimensions reposant sur le fond de la cuve 1 par l'intermédiaire d'une virole d'appui 4a venant en contact avec une partie renforcée 1a de la cuve.

La cuve 1 renferme, en plus du sommier 3 et du platelage 4, des structures internes, telles que la paroi 5 venant en appui sur le sommier 3 et délimitant une zone torique 6 à l'intérieur de la cuve 1; ces structures internes comportent également des viroles cylindriques à axe vertical telles que la virole 7 fixée le long d'une ouverture de la paroi 5 et constituant une cheminée de passage d'une pompe 8 dont on a représenté uniquement la partie inférieure sur la figure 1.

La pompe 8 comporte un corps vertical 8a de forme globalement cylindrique, placé à l'intérieur de la cheminée 7, renfermant les éléments actifs de la pompe et comportant des ouies d'aspiration du sodium liquide dans la cheminée 7.

La partie supérieure du corps 8a de la pompe non représentée sur la figure 1 traverse la dalle horizontale du réacteur fermant la cuve 1 et se trouve fixée à cette dalle qui assure la suspension de la pompe.

La zone 6 délimitée à l'intérieur de la cuve 1 par la paroi 5 constitue le collecteur froid du réacteur dans lequel se rassemble le sodium liquide refroidi après passage dans des echangeurs de chaleur intermédiaires plongeant dans la cuve et assurant l'échauffement de sodium liquide secondaire en utilisant la chaleur prélevée par le sodium liquide primaire dans le coeur 2 du réacteur. La cheminée de pompe 7 qui communique avec le collecteur froid est également remplie de sodium liquide refroidi dont la pompe 8 assure la réinjection à la base du coeur 2.

Dans les réacteurs nucléaires à neutrons rapides de puissance, actuellement en service ou dont la construction est prévue, la cuve renferme quatre pompes identiques associées a huit échangeurs de chaleur intermédiaires, ces éléments étant placés dans une zone annulaire à la périphérie de la cuve.

On va maintenant se reporter aux figures 1, 2 et 3 pour décrire la partie inférieure de la pompe 8 comportant une capacité sphérique, ou sphère de refoulement 10, dans laquelle débouche la partie inférieure du corps 8a de la pompe. La sphère 10 est ouverte à sa partie supérieure pour constituer une bride sur laquelle vient reposer une bride d'appui 12 correspondante du corps de la pompe 8.

A l'intérieur de la sphère 10 est placée une structure de séparation 13 permettant de délimiter deux zones dans la sphère de refoulement, dans chacune desquelles débouche une conduite de refoulement 14 par laquelle sera évacué le sodium liquide refoulé par la pompe.

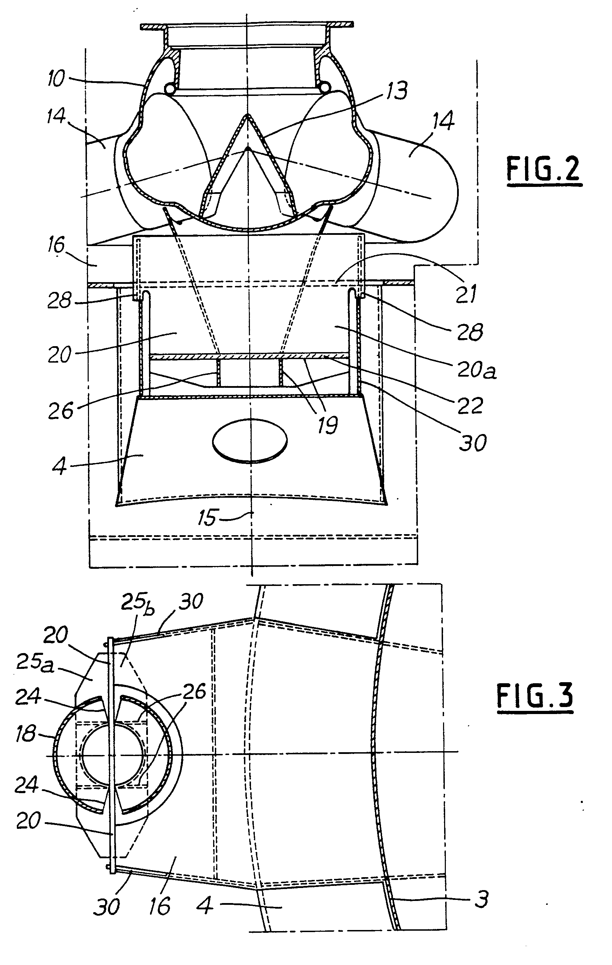

Les deux zones a l'intérieur de la sphère 10 et les deux conduites de refoulement 14 sont parfaitement symétriques par rapport à un plan vertical passant par l'axe ZZ' de la pompe 8. La trace 15 de ce plan de symétrie est visible sur la figure 2.

Les conduites de refoulement 14 sont engagées à l'intérieur du sommier 3 et débouchent, par leur extrémité opposée à leur extrémité reliée à la sphère 10, dans ce sommier, sous le coeur 2. Ces conduites 14 constituent donc les tuyauteries d'alimentation du coeur en sodium qui circule, à partir du sommier, de bas en haut dans les assemblages du coeur.

Le platelage 4 comporte, dans une direction radiale de la cuve 1, un prolongement 16 dirigé vers l'extérieur, au-dela de la périphérie du sommier 3 supportant le coeur 2.

La suspension de la sphère 10 à la structure fixe du réacteur est assurée par l'intermédiaire de ce prolongement radial 16 du platelage 4.

Une virole 18 de forme tronconique est fixée par soudage au niveau d'une piéce de raccordement, sur la sphère 10, suivant sa grande base. Cette virole tronconique 18 est également solidaire d'une structure de liaison 19 fixée le long de sa petite base. La virole tronconique 18 est placée de façon que son axe soit confondu avec l'axe ZZ' de la pompe.

Une lame métallique 20, de forme sensiblement plane, est fixée par soudage d'une part suivant une zone horizontale 21, à l'extrémité du prolongement 16 du platelage 4 et d'autre part, suivant une zone horizontale 22, à la structure de liaison 19.

Les zones 21 et 22 s'étendent sur toute la largeur de la lame ou plaque 20, la zone 22 assurant la liaison de la lame 20 à la structure 19 étant placee en-dessous de la zone 21 assurant la liaison de cette lame 20 à la structure fixe 4. La sphère 10 est ainsi suspendue au platelage 4 par l'intermédiaire de la lame 20.

Comme il est visible sur la figure 3, la virole 18 est ouverte sur toute la hauteur de sa paroi latérale pour constituer une fente 24 de direction diamètrale, divergente vers le haut. La lame 20 est disposée suivant cette fente 24, ce qui permet des débattements de cette lame à l'intérieur de la fente 24.

La structure de liaison 19 comporte deux plaques horizontales 25a et 25b fixées par soudage de part et d'autre de la lame 20 et des pattes de renforcement transversales 26.

La fente 24 est dirigée suivant une direction diamètrale de la virole 18 perpendiculaire au plan de symétrie des conduites de refoulement 14, de trace 15 sur la figure 2. Le bord de fixation de la lame 20 sur le prolongement 16 est tel que cette lame 20 soit sensiblement verticale, lorsque la sphère 10 n'est pas sollicitée par des contraintes d'origine thermique. Cette lame 20 est disposée suivant un plan vertical renfermant l'axe ZZ' de la pompe et perpendiculaire au plan de symétrie des conduites de refoulement.

La lame 20 comporte une partie inférieure dont la largeur correspond a la longueur des plaques de liaison 25a et 25b et une partie supérieure de largeur plus importante, au-dessus de la zone de liaison 21. Cette partie de largeur plus importante de la lame 20 est terminée vers le bas et vers l'extérieur, par deux rebords 28 débordant vers l'extérieur par rapport a la partie inférieure de la plaque 20.

Deux plaques 30 sont fixées verticalement sur le prolongement 16 du platelage 4, de chaque côté de ce prolongement, à la verticale des rebords 28.

Comme il est visible sur la figure 1a, la plaque 20 comporte une partie amincie 20a dont l'épaisseur est sensiblement égale à la moitié de l'épaisseur des autres parties de la plaque. Cette zone amincie 20a s'étend approximativement entre les zones de jonction 21 et 22.

A la suite d'un incident ou d'un changement rapide de régime, des variations rapides et de forte amplitude de la température du fluide de refroidissement se manifestent, la sphère 10 est sollicitée, du fait des variations de dilatation des matériaux, principalement dans des directions radiales paralléles au plan de symétrie des conduites de refoulement 14. Ces sollicitations perpendiculaires au plan de la lame 20 entrainent des déplacements de la sphère 10 qui se traduisent simplement par une flexion de la lame flexible 20, dans sa partie amincie 20a. L'ensemble constitué par la sphère de refoulement 10, sa virole de liaison tronconique 18 et les conduites de refoulement 14 peut se déplacer sans engendrer de contraintes autres que les contraintes de flexion de la lame 20. La flexion de la lame 20 est rendue possible grâce au débattement procuré par la forme des fentes 24 dans la virole de suspension 18.

La lame 20 qui présente une grande largeur et qui travaille en traction peut aisément assurer la suspension de la sphère de refoulement dont la masse n'est pas extrêmement importante. D'autre part, la distance verticale entre les zones de liaison 21 et 22 de la lame 20 est telle que, même pour les déplacements de la sphère d'amplitude maximale, la flexion de la lame 20 reste faible.

Dans le cas d'un réacteur nucléaire d'une puissance électrique de 1500 MW comportant quatre pompes primaires, on utilisera par exemple une lame 20 en acier inoxydable constituée par une plaque d'une épaisseur de 40 mm amincie dans une zone centrale de flexion, jusqu'à une épaisseur de 20 mm. La largeur de la plaque 20 dans sa partie inférieure est de 1,60 m et la hauteur de la zone amincie est de 0,45 m.

Dans le cas où la plaque 20 par suite de fatigues répétées et non prévues ou de défauts internes non détectés se romprait, la sphère de refoulement 10 viendrait reposer sur la partie supérieure de la lame 20 qui est elle-même en appui, par l'intermédiaire des rebords 28, sur les plaques verticales 30.

On voit que les principaux avantages du dispositif de support suivant l'invention sont de permettre une suspension extrêmement sûre et malgré tout flexible de la sphère de refoulement constituant la partie inférieure de cette pompe. Dans le cas de variations rapides de température du fluide de refroidissement du réacteur, les dilatations radiales sont reprises par flexion de la plaque 20 sans que des contraintes notables soient transmises à la zone de liaison entre les conduites de refoulement 14 et le sommier 3.

De manière générale, les structures constituant la partie inférieure de la pompe ou reliées à cette partie inférieure ne subissent que des contraintes de très faible valeur, dans le cas de variations rapides de température du fluide de refroidissement.

L'invention ne se limite pas au mode de réalisation qui a été décrit.

C'est ainsi qu'on peut imaginer un dispositif de liaison entre la sphère et la lame d'un type différent d'une virole tronconique fendue, une structure de liaison différente de la structure 19 et une lame d'une autre forme que celle qui a été décrite ou une pluralité de lames.

De même la capacité de refoulement peut avoir une forme différente de celle d'une sphère et le nombre de tuyauteries qui s'y rattachent être quelconque.

La pompe comportant une capacité de refoulement suspendue de manière élastique à la structure fixe du réacteur suivant l'invention peut être utilisée dans d'autres réacteurs nucléaires que les réacteurs nucléaires à neutrons rapides refroidis au sodium liquide et de type intégré. Une telle pompe peut être utilisée dans des réacteurs non intégrés quel qu'en soit le fluide de refroidissement et, de manière générale, dans tout dispositif de mise en circulation d'un fluide d'échange thermique dans un réacteur nucléaire utilisant une pompe ayant un corps vertical suspendu par sa partie supérieure.

**Revendications**

1. Dispositif de support d'une capacité de refoulement associée à une pompe pour la mise en circulation du fluide de refroidissement d'un réacteur nucléaire comportant un corps vertical (8a) supporté à sa partie supérieure et communiquant à sa partie inférieure avec la capacité de refoulement (10) portée par une structure fixe (4) du réacteur et reliée à des moyens de refoulement (14) débouchant sous le coeur (2) du réacteur et disposés de façon symétrique par rapport à un plan vertical passant par l'axe ZZ' de la pompe, caractérisé par le fait qu'il comporte au moins une lame métallique (20) sensiblement plane placée verticalement suivant l'axe ZZ' de la pompe et perpendiculairement au plan de symétrie des moyens de refoulement (14), la capacité (10) étant fixée à la lame (20) dans une zone de liaison (22) située en-dessous d'une zone (21) de cette lame (20) assurant sa liaison avec la structure fixe (4) de façon à être suspendue à la structure fixe (4) par la lame (20) et la lame comportant une partie amincie (20a), suivant une certaine hauteur, dans sa partie centrale, entre ses zones de liaison (21, 22).

2. Dispositif de support suivant la revendication 1, dans le cas où la capacité de refoulement (10) a la forme d'une sphère, caractérisé par le fait qu'il comporte en outre une virole tronconique (18) prolongeant la sphère (10) vers le bas suivant la direction axiale de la pompe et comportant dans sa paroi latérale une fente diamètrale (24) dans laquelle est engagée la lame (20) avec un certain débattement, la virole tronconique (18) étant reliée à la sphère (10) par sa grande base et à la lame (20) par l'intermédiaire d'un dispositif de liaison (19) fixé le long de sa petite base.

3. Dispositif de support suivant la revendication 2, caractérisé par le fait que le dispositif de liaison (19) comporte deux plaques planes (25a, 25b) soudées d'une part à la virole tronconique (18) et d'autre part à la lame (20) et des éléments de renfort transversaux (26) perpendiculaires aux plaques (25a, 25b).

4. Dispositif de support suivant l'une quelconque des revendications 1 à 3, caractérisé par le fait qu'il comporte en outre des supports (30) disposés dans la direction verticale, sur la structure fixe (4) et que la lame (20) comporte deux rebords latéraux (28) dans sa partie supérieure, les rebords latéraux (28) étant disposés chacun au-dessus d'un support vertical (30) pour assurer le support de la capacité de refoulement (10), en cas de rupture de la lame (20).

5. Réacteur nucléaire à neutrons rapides de type intégré comportant un platelage (4) reposant sur le fond de la cuve (1) et supportant un sommier (3) sur lequel repose le coeur (2) du réacteur, et un dispositif de support suivant l'une quelconque des revendications 1 à 4, caractérisé par le fait que la lame (20) est fixée par soudure, dans sa zone (21) sur un prolongement radial (16) du platelage (4) en saillie vers l'extérieur par rapport au sommier (3).

## Patentansprüche

1. Auflagevorrichtung für ein Auslassgehäuse verbunden mit einer Pumpe für das In-Zirkulation-Versetzen des Kühlfluids eines Kernreaktors, mit einem vertikalen Körper (8a), der an seinem oberen Bereich gestützt ist und an seinem unteren Bereich mit dem Auslassgehäuse (10) in Verbindung steht, das durch eine feste Struktur (4) des Reaktors getragen wird, und mit Auslasseinrichtungen (14) verbunden ist, die in den Kern (2) des Reaktors münden, und auf symmetrische Weise bezüglich einer vertikalen Ebene, die durch die Achse ZZ' der Pumpe geht, angeordnet sind, dadurch gekennzeichnet, daß sie wenigstens ein metallisches im wesentlichen ebenes Blatt (20) aufweist, das vertikal gemäß der Achse ZZ' der Pumpe und senkrecht zur Symmetrieebene der Auslasseinrichtungen (14) angeordnet ist, wobei das Auslassgehäuse (10) an dem Blatt (20) in einer Verbindungszone (22) befestigt ist, die unterhalb einer Zone (21) dieses Blattes (20) angeordnet ist, wobei es seine Verbindung mit der festen Struktur (4) durch das Blatt (20) derart sicherstellt, daß es an der festen Struktur (4) durch das Blatt (20) aufgehängt ist, und das Blatt einen verjüngten Bereich (20a) aufweist, gemäß einer bestimmten Höhe, in seinem Mittenbereich, zwischen seinen Verbindungszonen (21, 22).

2. Auflagevorrichtung nach Anspruch 1, in dem Fall, wo das Auslassgehäuse (10) Kugelform aufweist, dadurch gekennzeichnet, daß sie weiterhin einen kegelstumpfförmigen Mantel (18) aufweist, der die Kugel (10) nach unten verlängert, gemäß der Achsrichtung der Pumpe und in der Seitenwand einen diametralen Spalt (24) aufweist, in das Blatt (20) mit einem gewissen Durchfederungsweg eingreift, wobei der kegelstumpfförmige Mantel (18) mit der Kugel (10) mit seiner großen Basis und mit dem Blatt (20) mittels einer Verbindungsvorrichtung (19) verbunden ist, die entlang seiner kleinen Basis festgelegt ist.

3. Auflagevorrichtung nach Anspruch 2, dadurch gekennzeichnet, daß die Verbindungsvorrichtung (19) zwei ebene Platten (25a, 25b) aufweist, die einerseits an dem kegelstumpfförmigen Mantel (18) und andererseits an dem Blatt (20) angeschweißt sind und Querverstärkungselemente (26) aufweist, die senkrecht zu den Platten (25a, 25b) verlaufen.

4. Auflagevorrichtung nach einem der Ansprüche 1 bis 3, dadurch gekennzeichnet, daß sie weiterhin Stützen (30) aufweist, die in der vertikalen Richtung auf der festen Struktur (4) angeordnet sind, und daß das Blatt (20) zwei seitliche Ränder (28) in seinem oberen Bereich aufweist, wobei die seitlichen Ränder (28) jeweils oberhalb einer vertikalen Stütze (30) angeordnet sind, um die Abstützung des Auslassgehäuses (10) für den Fall des Bruchs des Blatts (20) sicherzustellen.

5. Schneller Kernreaktor vom integrierten Typ, mit einem Belag (4), der auf dem Boden des Behälters (1) ruht, und einen Träger (3) stützt, auf dem der Kern (2) ruht, und einer Auflagevorrichtung nach einem der Ansprüche 1 bis 4, dadurch gekennzeichnet, daß das Blatt (20) durch Schweißen in seiner Zone (21) auf einer radialen Verlängerung (16) des Belags (4), bezüglich des Trägers (3) nach außen vorspringend, fixiert ist.

## Claims

1. A support device for a discharge tank associated with a pump for circulating a coolant fluid of a nuclear reactor comprising a vertical body (8a) supported at its upper end and communicating at its lower end with the discharge tank (10) carried by a fixed structure (4) opening out under the core (2) of the reactor and disposed symmetrically relative to a vertical plane passing through the axis ZZ' of the pump, characterised in that it comprises at least one substantially planar metal strip (20) disposed vertically on the axis ZZ' of the pump and perpendicularly to the plane of symmetry of the discharge means (14), the tank (10) being fixed to the strip (20) in a connecting zone (22) located below a zone (21) of said strip (20) ensuring its connection to the fixed structure (4) so as to be suspended from the fixed structure (4) by the strip (20), and the strip having a thinner portion (20a), over a certain height, in its central part, between its connecting zones (21, 22).

2. A support device according to claim 1, where the discharge tank (10) is spherical in shape, characterised in that it further comprises a frustoconical sleeve (18) downwardly extending the sphere (10) in the axial direction of the pump and including in its lateral wall a diametrical slot (24) in which the strip engages with a certain degree of play, the frustoconical sleeve (18) being connected to the sphere (10) by its large base and to the strip (20) by means of a connecting device (19) fixed along its small base.

3. A support device according to claim 2, characterised in that the connecting device (19) comprises two planar plates (25a, 25b) welded, on one hand, to the frustoconical sleeve (18) and, on the other hand, to the strip (20) and transverse reinforcing elements (26) perpendicular to the plates (25a, 25b).

4. A support device according to any one of claims 1 to 3, characterised in that it further comprises supports (30) disposed in the vertical direction on the fixed structure (4), and that the strip (20) has two lateral edge portions (28) in its upper part, the lateral edge portions (28) each being disposed above a vertical support (30) to ensure that the discharge tank (10) is supported in the event of fracture of the strip (20).

5. A fast neutron nuclear reactor of the integrated type comprising a plating (4) bearing on the bottom of the vessel (1) and supporting a bed (3) on which the core (2) of the reactor bears, and a support device according to any one of claims 1 to 4, characterised in that the strip (20) is fixed by welding, in its zone (21), to a radial extension (16) of the plating (4) which projects outwardly from the bed (3).

FIG.1

FIG.1a

FIG.2

FIG.3

2